# EUROPEAN PATENT APPLICATION

(11) **EP 4 763 756 A1**
(43) Date of publication of application: **24.06.2026**
(21) Application number: 24855225.9
(22) Date of filing: 23.02.2024
(51) Int. Cl.: B65G 35/00, B65G 43/08

(54) **CONVEYOR DEVICE, FAN BLADE SCANNING SYSTEM AND FAN BLADE SCANNING METHOD**

(30) Priority: 18.08.2023 CN 202311047405
(71) Applicant: NUCTECH COMPANY LIMITED, Beijing 100084 (CN)
(72) Inventor: ZONG, Chunguang, Beijing 100084 (CN); WANG, Qiangqiang, Beijing 100084 (CN); SHI, Junping, Beijing 100084 (CN); FAN, Xuping, Beijing 100084 (CN); SONG, Quanwei, Beijing 100084 (CN); MENG, Hui, Beijing 100084 (CN); LI, Hongqi, Beijing 100084 (CN)
(74) Representative: Gunzelmann, Rainer
(86) International application number: PCT/CN2024/078299
(87) International publication number: WO 2025/039493

(57) **Abstract**

The present disclosure provides a conveying device, a fan blade scanning system and a fan blade scanning method. The conveying device comprises a driving conveyor and a driven conveyor, wherein the driving conveyor comprises a main driving member and a main body member, and the main body member comprises a carrier member and a micro-motion member, and the carrier member is connected with the main driving member so that the main driving member drives the carrier member to move at a first set speed; the micro-motion member is movably arranged on the carrier member, a first end of the fan blade is configured to be fixedly mounted on the micro-motion member, and a second end of the fan blade is configured to be fixedly mounted on the driven conveyor. In the case that the carrier member stops moving, the micro-motion member drives the fan blade and the driven conveyor to move at a second set speed. The conveying device facilitates different specifications of fan blades to smoothly pass through the scanning area of the scanning device. Meanwhile, the conveying device of the present disclosure has the advantages of simple structure, flexible and convenient use, low manufacturing cost and low maintenance cost.

## Description

### CROSS-REFERENCE TO RELATED APPLICATION

This application is based on and claims priority to Chinese Patent Application No. 202311047405.6 filed on August 18, 2023, the disclosure of which is incorporated by reference herein in its entirety.

### TECHNICAL FIELD

The present disclosure relates to the field of wind power generation technology, and more specifically to a conveying device for scanning a fan blade, a fan blade scanning system and a fan blade scanning method.

### BACKGROUND

In the field of wind power generation technology, the fan blade is required to be scanned by the scanning device before leaving the factory or during the maintenance, so as to find out the surface and internal volumetric defects such as pores, inclusions and cracks, so as to reduce the risk of failure of the fan blade. However, due to a large volume of the fan blade and different specifications of fan blades having different volumes, how to allow different specifications of fan blades to smoothly pass through a scanning area of the scanning device has become an urgent problem to be solved.

### SUMMARY

In order to solve the above-described problem in the prior art, the embodiment of the present disclosure provides a conveying device for scanning a fan blade, a fan blade scanning system and a fan blade scanning method. The conveying device for scanning a fan blade has the advantages of facilitating different specifications of fan blades to smoothly pass through a scanning area of the scanning device, and at the same time, has the advantages of simple structure, flexible and convenient use, low manufacturing cost and low maintenance cost. In addition, it is possible to flexibly adapt to the requirements of different scanning modes (for example, DR scanning and CT scanning) for a conveying speed.

In a first aspect of the present disclosure, a conveying device for scanning a fan blade is provided. The conveying device comprises: a driving conveyor including a main driving member and a main body member, wherein the main body member is provided with a first mounting portion configured to fixedly mount a first end of the fan blade; and a driven conveyor provided with a second mounting portion configured to fixedly mount a second end of the fan blade; in the case that the driving conveyor moves, the fan blade and the driven conveyor are driven to move, so that the fan blade passes through a scanning area of a scanning device. Wherein, the main body member comprises: a carrier member connected with the main driving member so that the main driving member drives the carrier member to move at a first set speed; and a micro-motion member movably arranged on the carrier member, wherein in the case that the carrier member stops moving, the micro-motion member drives the fan blade and the driven conveyor to perform micro-motion at a second set speed.

In the conveying device for scanning a fan blade according to the embodiment of the present disclosure, the driving conveyor and the driven conveyor may transmit the fan blade through a scanning area of the scanning device at different first set speeds or second set speeds, so that the fan blade may be inspected by the scanning device. In the case that the conveying device of the present disclosure conveys the fan blade for scanning, the driving conveyor may drive the fan blade and the driven conveyor to move. Thus, only the driving conveyor is required to be driven by energy, while the driven conveyor is not required to be driven by energy, so that energy may be saved. In addition, the driving conveyor and the driven conveyor are separately arranged, and connected through the fan blade in the case that conveying the fan blade, so that the movement of the driving conveyor drives the driven conveyor to move. If the driving conveyor and the driven conveyor are not separately arranged but integrally arranged to convey the fan blade, only the fan blade with a fixed specification will be conveyed, so that the driving conveyor and the driven conveyor that are not separately arranged are not universal. The driving conveyor and the driven conveyor that are separately arranged in the present application may determine the relative setting positions therebetween according to the specifications of the fan blade, so that different specifications of fan blades may be connected between the driving conveyor and the driven conveyor, thereby facilitating different specifications of fan blades to smoothly pass through a scanning area of the scanning device. In addition, the carrier member and the micro-motion member are provided so that the conveying device may flexibly adapt to the requirements of different scanning modes (for example, DR scanning and CT scanning) for a conveying speed. However, if the carrier member is not combined with the micro-motion member, the fan blade will be conveyed only at the same speed, so that it is impossible for the fan blade to adapt to different scanning modes. Meanwhile, the conveying device of the present disclosure has the advantages of simple structure, flexible and convenient use, low manufacturing cost and low maintenance cost.

In some embodiments, the micro-motion member comprises: a driving portion; a lead screw connected with the driving portion, wherein the driving portion is configured to drive the lead screw to rotate; and a first mounting portion movably arranged on the lead screw, wherein in the case that the lead screw rotates, the first mounting portion drives the fan blade and the driven conveyor to perform micro-motion at the second set speed.

In some embodiments, the driving portion is a servo motor.

In some embodiments, the carrier member comprises: a first wheel set connected with the main driving member, so that the main driving member drives the first wheel set to move; and a carrier portion connected to the first wheel set, wherein the micro-motion member is movably arranged on the carrier portion.

In some embodiments, the main drive is a reduction motor.

In some embodiments, the driven conveyor comprises: a support including a support member and a second wheel set, wherein the support member is connected to the second wheel set; and the second mounting portion arranged on the support member to fixedly mount the second end of the fan blade.

In some embodiments, the second mounting portion is a clamping member.

In some embodiments, the clamping member comprises: a base arranged on the support member; and a clamping jaw connected to the base to clamp and fixedly mount the second end of the fan blade.

In some embodiments, the conveying device for scanning a fan blade further comprises: a track arranged on the scanning area, wherein the driving conveyor and the driven conveyor are rollably arranged on the track.

In a second aspect of the present disclosure, a fan blade scanning system is provided. The scanning system comprises: the above-described conveying device for scanning a fan blade; and a scanning device for scanning a fan blade conveyed by the conveying device.

In the fan blade scanning system according to the embodiment of the present disclosure, the driving conveyor and the driven conveyor may transmit the fan blade through a scanning area of the scanning device at different first set speeds or second set speeds, so that the fan blade may be inspected by the scanning device. In the case that the conveying device of the present disclosure conveys the fan blade for scanning, the driving conveyor may drive the fan blade and the driven conveyor to move. Thus, only the driving conveyor is required to be driven by energy, while the driven conveyor is not required to be driven by energy, so that energy may be saved. In addition, the driving conveyor and the driven conveyor are separately arranged, and connected through the fan blade in the case that conveying the fan blade, so that the movement of the driving conveyor drives the driven conveyor to move. If the driving conveyor and the driven conveyor are not separately arranged but integrally arranged to convey the fan blade, only the fan blade with a fixed specification will be conveyed, so that the driving conveyor and the driven conveyor that are not separately arranged are not universal. The driving conveyor and the driven conveyor that are separately arranged in the present application may determine the relative setting positions therebetween according to the specifications of the fan blade, so that different specifications of fan blades may be connected between the driving conveyor and the driven conveyor, thereby facilitating different specifications of fan blades to smoothly pass through a scanning area of the scanning device. In addition, the carrier member and the micro-motion member are provided so that the conveying device may flexibly adapt to the requirements of different scanning modes (for example, DR scanning and CT scanning) for a conveying speed. However, if the carrier member is not combined with the micro-motion member, the fan blade will be conveyed only at the same speed, so that it is impossible for the fan blade to adapt to different scanning modes. Meanwhile, the conveying device of the present disclosure has the advantages of simple structure, flexible and convenient use, low manufacturing cost and low maintenance cost.

In some embodiments, the scanning device comprises: a DR scanning device configured to conduct an overall scan of the fan blade to obtain a scanning result, wherein the scanning result being abnormal or normal; and a CT scanning device configured to scan the abnormal portion of a fan blade where the scanning result thereof is abnormal.

In a third aspect of the present application, a fan blade scanning method is provided. The scanning method is applied to the above-described fan blade scanning system. The scanning method comprises: fixing the micro-motion member on the carrier member, and the main driving member drives the carrier member to move at a first set speed; the carrier member drives the micro-motion member and the fan blade to move at the first set speed, so that the fan blade passes through a scanning area of the DR scanning device at the first set speed. The DR scanning device conduct an overall scan of the fan blade to obtain a DR scanning result, wherein the DR scanning result being abnormal or normal; in the case that the DR scanning result is normal, the fan blade is qualified; in the case that the DR scanning result is abnormal, the main driving member drives the carrier member to convey the abnormal portion of the fan blade where the scanning result thereof is abnormal to a scanning area of the CT scanning device and stops at a set distance; the micro-motion member moves at a second set speed relative to the carrier member, and the micro-motion member drives the fan blade and the driven conveyor to pass through a scanning area of the CT scanning device at the second set speed; the CT scanning device scans the abnormal portion of the fan blade where the scanning result thereof is abnormal.

In the fan blade scanning method according to the embodiment of the present disclosure, it is possible to facilitate the fan blade scanning system to complete the inspection of the fan blade, and the carrier member and the micro-motion member may facilitate transmitting the fan blade through a scanning area of the DR scanning device and the CT scanning device, so that the fan blade 200 may be inspected by the DR scanning device and the CT scanning device. The method of the present disclosure may flexibly adapt to the requirements of different scanning modes (a DR scanning mode and a CT scanning mode) for a conveying speed. The DR scanning mode and the CT scanning mode are combined so that it is possible to enhance the inspection quality and improve the inspection efficiency of the fan blade.

Additional aspects and advantages of the present disclosure will be set forth in part in the following description, and in part will become apparent from the following description, or may be learned by practice of the present disclosure.

### BRIEF DESCRIPTION OF THE DRAWINGS

In order to more completely understand the present disclosure and its advantages, reference will now be made to the following description in conjunction with the accompanying drawings, in which:
Fig. 1 is a schematic structural view of a main body member according to the embodiment of the present disclosure;
Fig. 2 is a schematic structural view of a driven conveyor according to the embodiment of the present disclosure;
Fig. 3 is a schematic view of DR scanning by a conveying device according to the embodiment of the present disclosure;
Fig. 4 is a schematic view of CT scanning by a conveying device according to the embodiment of the present disclosure;
Fig. 5 is a flowchart of a fan blade scanning method according to the embodiment of the present disclosure.

### Reference numerals:

Conveying device 100, fan blade 200,
Driving conveyor 1,
Main body member 11, carrier member 111, first wheel set 1111, carrier portion 1112,
Micro-motion member 112,
Driven conveyor 2, support 21, support member 211, second wheel set 212, clamping member 22, base 221 and clamping jaw 222.

### DETAILED DESCRIPTION

Hereinafter, the embodiments of the present disclosure will be described with reference to the accompanying drawings. However, it should be understood that, these descriptions which are only exemplary, are not intended to limit the scope of the present disclosure. Furthermore, in the following description, descriptions of common knowledge structures and technologies are omitted to avoid that the concepts of the present disclosure are unnecessarily confused. In addition, various embodiments of the present application provided below as well as the technical features therein may be arbitrarily combined with each other.

The terms used here which are only for the purpose of describing specific embodiments, are not intended to limit the present disclosure. Furthermore, the terms "comprising", "including" and the like used here indicate the presence of features, steps, operations and/or components, but do not exclude the presence or addition of one or more other features, steps, operations or components. All terms (including technical and scientific terms) used here have the meanings usually understood by those skilled in the art unless otherwise defined. It should be noted that, the terms used here should be construed as having meanings consistent with the context of this specification, but should not be interpreted in an idealized or over-stereotyped way.

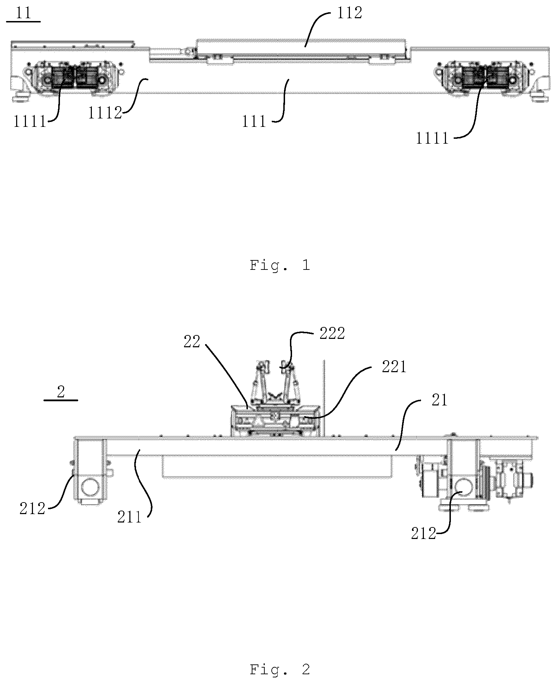

Referring to Figs. 1 to 5, a conveying device 100 for scanning a fan blade, a fan blade scanning system and a fan blade scanning method according to the embodiment of the present disclosure will be described below.

As shown in Figs. 1 to 4, the conveying device 100 for scanning a fan blade according to the embodiment of the present disclosure comprises a driving conveyor 1 and a driven conveyor 2.

Specifically, in conjunction with Figs. 1 to 4, the driving conveyor 1 may comprise a main driving member and a main body member 11. The main body member 11 is connected to the main driving member so that the main driving member drives the main body member 11 to move, and the main body member 11 is provided with a first mounting portion configured to fixedly mount a first end of the fan blade 200. The driven conveyor 2 is provided with a second mounting portion configured to fixedly mount a second end of the fan blade 200. In the case that the driving conveyor 1 moves, the fan blade 200 and the driven conveyor 2 are driven to move, so that the fan blade 200 passes through a scanning area of the scanning device. For example, the first end may be a root of the fan blade 200, and the second end may be a tail of the fan blade 200. The first mounting portion may be a blade root support frame (not shown) of the fan blade.

Wherein, as shown in Fig. 1, the main body member 11 comprises a carrier member 111 and a micro-motion member 112. The carrier member 111 is connected with the main driving member, so that the main driving member drives the carrier member 111 to move at a first set speed. The micro-motion member 112 is movably arranged on the carrier member 111, and the first end of the fan blade 200 is configured to be fixedly mounted on the micro-motion member 112. In the case that the carrier member 111 stops moving, the micro-motion member 112 drives the fan blade 200 and the driven conveyor 2 to perform micro-motion at a second set speed. Here, the first set speed may be a conveying speed suitable for effective DR scanning of the fan blade, and the second set speed may be a conveying speed suitable for effective CT scanning of the fan blade. Generally, the first set speed is greater than the second set speed.

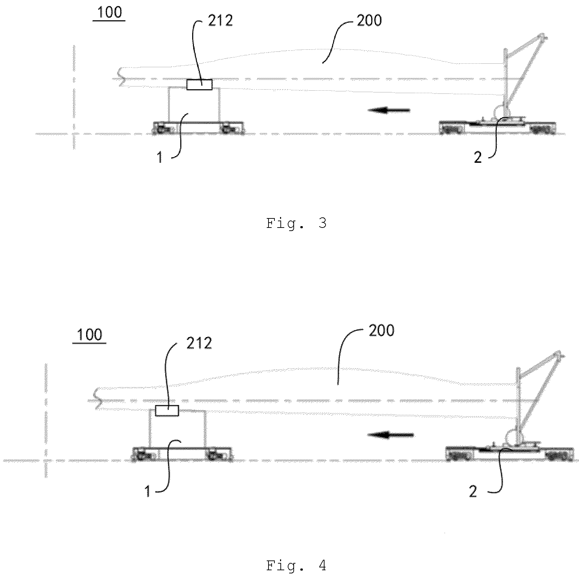

It is to be noted that, in order to enhance the inspection quality and improve the inspection efficiency, the fan blade 200 is usually subjected to DR scanning and CT scanning. In conjunction with Fig. 3, during the DR scanning, it is required that the fan blade 200 rapidly passes through a scanning area of the DR scanning device at a first set speed. At this time, the micro-motion member 112 is stationary relative to the carrier member 111, the main driving member drives the carrier member 111 to move at a first set speed, and the carrier member 111 drives the micro-motion member 112 and the fan blade 200 to move at a first set speed. Thus, the fan blade 200 may rapidly pass through a scanning area of the DR scanning device at a first set speed. In the case that the DR scanning result is normal, the fan blade 200 is qualified.

In the case that the DR scanning result is abnormal, it is necessary to perform CT scanning on the abnormal portion of the fan blade 200 that is abnormal. In conjunction with Fig. 4, it is required that the fan blade 200 slowly passes through a scanning area of the CT scanning device at a second set speed, also that is, an inching speed. In this case, the main driving member drives the carrier member 11 to convey the abnormal portion of the fan blade where the scanning result thereof is abnormal to a position located at a set distance in front of a scanning area of the CT scanning device. For example, in the case that the sensor (not shown) detects that the distance between the scanning area of CT scanning device and the abnormal portion of the fan blade where the scanning result thereof is abnormal is a set distance, the main driving member stops driving the carrier member 111 accordingly. Subsequently, the micro-motion member 112 moves relative to the carrier member 111, and the micro-motion member 112 drives the fan blade 200 and the driven conveyor 2 to move at a second set speed. Thus, the fan blade 200 may slowly pass through a scanning area of the CT scanning device at a second set speed, also that is, an inching speed.

In some examples, for example, the main driving member may be an electric motor, and the power source of the micro-motion member 112 may be an electric motor. In the case that the carrier member 111 moves at a first set speed and the micro-motion member 112 is stationary relative to the carrier member 111, the main driving member is powered on and the power source of the micro-motion member 112 is powered off. In the case that the carrier member 111 is stationary and the micro-motion member 112 moves at a second set speed relative to the carrier member 111, the main driving member is powered off and the power source of the micro-motion member 112 is powered on.

Thus, the carrier member 111 and the micro-motion member 112 are provided so that the conveying device 100 may flexibly adapt to the requirements of different scanning modes (for example, DR scanning and CT scanning) for a conveying speed.

It may be understood that, the fan blade is required to be scanned by the scanning device before leaving the factory or during the maintenance, so as to find out the surface and internal volumetric defects such as pores, inclusions and cracks, so as to reduce the risk of failure of the fan blade. However, due to a large volume of the fan blade and different specifications of fan blades having different volumes, how to allow different specifications of fan blades to smoothly pass through a scanning area of the scanning device has become an urgent problem to be solved.

In the conveying device 100 for scanning a fan blade according to the embodiment of the present disclosure, the driving conveyor 1 and the driven conveyor 2 may transmit the fan blade 200 through a scanning area of the scanning device at different first set speeds or second set speeds, so that the fan blade 200 may be inspected by the scanning device. In the case that the conveying device of the present disclosure conveys the fan blade for scanning, the driving conveyor 1 may drive the fan blade 200 and the driven conveyor 2 to move. Thus, only the driving conveyor 1 is required to be driven by energy, while the driven conveyor 2 is not required to be driven by energy, so that energy may be saved. In addition, the driving conveyor 1 and the driven conveyor 2 are separately arranged, and connected through the fan blade 200 in the case that conveying the fan blade 200, so that the movement of the driving conveyor 1 drives the driven conveyor 2 to move. If the driving conveyor and the driven conveyor are not separately arranged but integrally arranged to convey the fan blade, only the fan blade with a fixed specification will be conveyed, so that the driving conveyor and the driven conveyor that are not separately arranged are not universal. The driving conveyor 1 and the driven conveyor 2 that are separately arranged in the present application may determine the relative setting positions therebetween according to the specifications of the fan blade 200, so that different specifications of fan blades 200 may be connected between the driving conveyor 1 and the driven conveyor 2, thereby facilitating different specifications of fan blades 200 to smoothly pass through a scanning area of the scanning device. In addition, the carrier member 111 and the micro-motion member 112 are provided so that the conveying device 100 may flexibly adapt to the requirements of different scanning modes (for example, DR scanning and CT scanning) for a conveying speed. However, if the carrier member is not combined with the micro-motion member, the fan blade will be conveyed only at the same speed, so that it is impossible for the fan blade to adapt to different scanning models. Meanwhile, the conveying device 100 of the present disclosure has the advantages of simple structure, flexible and convenient use, low manufacturing cost and low maintenance cost.

According to some embodiments of the present disclosure, the micro-motion member 112 may comprise a driving portion, a lead screw and a first mounting portion. The driving portion is arranged on the carrier member 111 as a power source of the micro-motion member 112. The lead screw is connected with the driving portion, which is configured to drive the lead screw to rotate. The first mounting portion is movably arranged on the lead screw, and in the case that the lead screw rotates, the first mounting portion is movable relative to the lead screw. The first end of the fan blade 200 is configured to be fixedly mounted to the first mounting portion, and in the case that the lead screw rotates, the first mounting portion drives the fan blade 200 and the driven conveyor 2 to perform micro-motion at a second set speed. Thus, the driving portion, the lead screw and the first mounting portion may facilitate implementing that the micro-motion member 112 drives the fan blade 200 and the driven conveyor 2 to perform micro-motion at a second set speed. In some embodiments, the first mounting portion cooperates with the lead screw in use via a nut.

According to some embodiments of the present disclosure, the driving member may be a servo motor, and it may be understood that, the servo motor may facilitate implementing to drive the lead screw to perform micro-motion.

According to other embodiments of the present disclosure, the micro-motion member 112 may comprise a device that may drive the fan blade 200 to perform micro-motion such as a linear guide rail or a pinion and rack.

According to some embodiments of the present disclosure, as shown in Fig. 1, the carrier member 111 may comprise a first wheel set 1111 and a carrier portion 1112. The first wheel set 1111 is connected with the main driving member, so that the main driving member drives the first wheel set 1111 to move. The carrier portion 1112 is connected to the first wheel set 1111, and the micro-motion member 112 is movably arranged on the carrier portion 1112. Thus, the first wheel set 1111 and the carrier portion 1112 may facilitate the movement of the carrier member 111.

According to some embodiments of the present disclosure, the main driving member may be a reduction motor, wherein the reduction motor may facilitate implementing driving the carrier member 111 to drive the micro-motion member 112 and the fan blade 200 to move rapidly at a first set speed.

According to some embodiments of the present disclosure, as shown in Fig. 2, the driven conveyor 2 comprises a support 21 and a clamping member 22 (an example of the second mounting portion). The support 21 comprises a support member 211 and a second wheel set 212, wherein the support member 211 is connected to the second wheel set 212. The clamping member 22 is arranged on the support member 211, and the clamping member 22 is configured to clamp the second end of the fan blade 200. Wherein, the second wheel set 212 may facilitate implementing that the driven conveyor 2 follows the driving conveyor 1, the support member 211 may facilitate the arrangement of the clamping member 22, and the clamping member 22 may facilitate that the fan blade 200 is fixedly mounted to the driven conveyor 2.

According to some embodiments of the present disclosure, as shown in Fig. 2, the clamping member 22 may comprise a base 221 and a clamping jaw 222. The base 221 is arranged on the support member 211. The clamping jaw 222 is connected to the base 221, and the clamping jaw 222 is configured to clamp the second end of the fan blade 200. Thus, the base 221 and the clamping jaws 222 may facilitate that the clamping member 22 is arranged on the support member 211 to facilitate clamping the fan blade 200.

According to some embodiments of the present disclosure, the conveying device 100 for scanning a fan blade may further comprise a track arranged on the scanning area, and the driving conveyor 1 and the driven conveyor 2 are rollably arranged on the track. For example, the first wheel set 1111 and the second wheel set 212 are both rollably arranged on the track. Thus, it is possible to reduce a friction force for the movement of the driving conveyor 1 and the driven conveyor 2, which facilitates that the driving conveyor 1 and the driven conveyor 2 carry the fan blade 200 to pass through a scanning area smoothly.

The fan blade scanning system according to the embodiment of the present disclosure comprises a conveying device 100 for scanning a fan blade and a scanning device. The conveying device 100 for scanning a fan blade is the above-described conveying device 100 for scanning a fan blade. The scanning device is configured to scan the fan blade 200 conveyed by the conveying device 100.

In the fan blade scanning system according to the embodiment of the present disclosure, the driving conveyor 1 and the driven conveyor 2 may transmit the fan blade 200 through a scanning area of the scanning device at different first set speeds or second set speeds, so that the fan blade 200 may be inspected by the scanning device. In the case that the conveying device of the present disclosure conveys the fan blade for scanning, the driving conveyor 1 may drive the fan blade 200 and the driven conveyor 2 to move. Thus, only the driving conveyor 1 is required to be driven by energy, while the driven conveyor 2 is not required to be driven by energy, so that energy may be saved. In addition, the driving conveyor 1 and the driven conveyor 2 are separately arranged, and connected through the fan blade 200 in the case that conveying the fan blade 200, so that the movement of the driving conveyor 1 drives the driven conveyor 2 to move. If the driving conveyor and the driven conveyor are not separately arranged but integrally arranged to convey the fan blade, only the fan blade with a fixed specification will be conveyed, so that the driving conveyor and the driven conveyor that are not separately arranged are not universal. The driving conveyor 1 and the driven conveyor 2 that are separately arranged in the present application may determine the relative setting positions therebetween according to the specifications of the fan blade 200, so that different specifications of fan blades 200 may be connected between the driving conveyor 1 and the driven conveyor 2, thereby facilitating different specifications of fan blades 200 to smoothly pass through a scanning area of the scanning device. In addition, the carrier member 111 and the micro-motion member 112 are provided so that the conveying device 100 may flexibly adapt to the requirements of different scanning modes (for example, DR scanning and CT scanning) for a conveying speed. However, if the carrier member is not combined with the micro-motion member, the fan blade will be conveyed only at the same speed, so that it is impossible for the fan blade to adapt to different scanning models. Meanwhile, the conveying device 100 of the present disclosure has the advantages of simple structure, flexible and convenient use, low manufacturing cost and low maintenance cost.

In some embodiments of the present application, the scanning device may comprise: a DR scanning device configured to conduct an overall scan of the fan blade to obtain a scanning result, wherein the scanning result being abnormal or normal; and a CT scanning device configured to scan an abnormal portion of a fan blade where the scanning result thereof is abnormal. Thus, it is possible to enhance the inspection quality and improve the inspection efficiency of the fan blade 200.

According to some embodiments of the present disclosure, the DR scanning device and the CT scanning device may be an integrated device, which has a scanning channel with an entrance and an exit. The driving conveyor 1 and the driven conveyor 2 convey the fan blade 200 to enter the scanning channel from the entrance for DR scanning. Here, the movement direction of the driving conveyor 1 to enter the scanning channel from the entrance is defined as a forward direction, and the CT scanning function is not enabled at this time. In the case that the DR scanning result is normal, the driving conveyor 1 and the driven conveyor 2 convey the fan blade 200 to leave the scanning channel from the exit. In the case that the DR scanning result is abnormal, the driving conveyor 1 is switched to move in a reverse direction, so that the driving conveyor 1 and the driven conveyor 2 convey the fan blade 200 to exit the scanning channel from the entrance. After exiting the scanning channel, the driving conveyor 1 is switched to the forward direction, so that the driving conveyor 1 and the driven conveyor 2 convey the fan blade 200 to enter the scanning channel from the entrance again for CT scanning. At this time, the main driving member drives the carrier member 111 to convey the abnormal portion of the fan blade 200 where the scanning result thereof is abnormal to a position located at a set distance in front of a scanning area of the CT scanning device. Subsequently, the micro-motion member 112 moves relative to the carrier member 111, and the micro-motion member 112 drives the fan blade 200 and the driven conveyor 2 to move at a second set speed. Thus, the fan blade 200 may slowly pass through the scanning area of the CT scanning device at a second set speed, also that is, an inching speed.

According to some embodiments of the present disclosure, in the case that the driving conveyor 1 is switched to move in the reverse direction, the driving conveyor 1 and the driven conveyor 2 convey the fan blade 200 to a position located at a set distance in front of the scanning area of the CT scanning device without leaving the scanning channel. Subsequently, the micro-motion member 112 drives the fan blade 200 and the driven conveyor 2 to move through the CT scanning area at a second set speed. After CT scanning is finished, the driving conveyor 1 is switched to the forward direction so that the driving conveyor 1 and the driven conveyor 2 convey the fan blade 200 to continue DR scanning.

Here, a first reference point may be set in a scanning area of CT scanning device. The abnormal portion may be a local range, and a second reference point may be set in the local range. The set distance may be understood as a distance from the first reference point to the second reference point.

According to some embodiments of the present disclosure, the scanning device may be a separate spiral CT device. During the DR scanning, the accelerator and the detector that are oppositely arranged on the circular boom are stationary in the scanning channel without rotational movement. During the CT scanning, the circular boom rotates to drive the accelerator and detector to rotate, so as to perform spiral CT scanning on the abnormal portion of the fan blade 200.

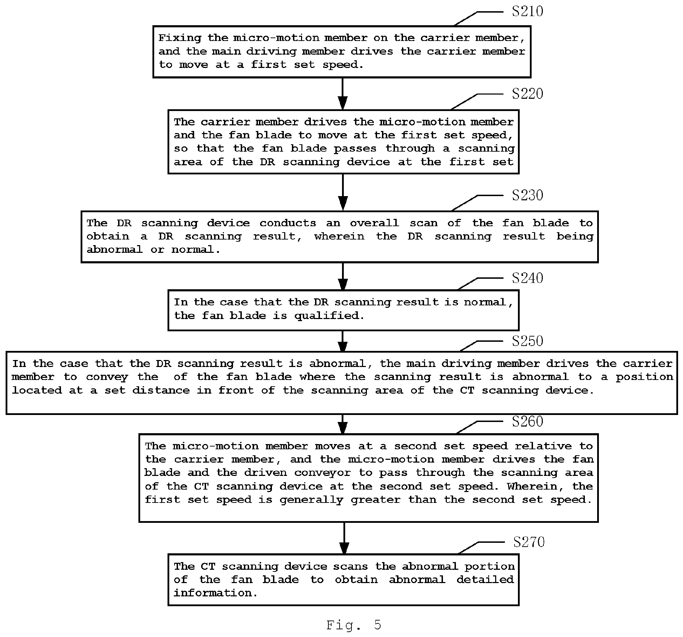

As shown in Fig. 5, the fan blade scanning method according to the embodiment of the present disclosure is applied to the above fan blade scanning system, and the scanning method comprises operations S210 to S270.

In operation S210, the micro-motion member is fixed on the carrier member, and the main driving member drives the carrier member to move at a first set speed.

In operation S220, the carrier member drives the micro-motion member and the fan blade to move at the first set speed, so that the fan blade passes through a scanning area of the DR scanning device at the first set speed.

In operation S230, the DR scanning device conduct an overall scan of the fan blade to obtain a DR scanning result, wherein the DR scanning result being abnormal or normal.

In operation S240, in the case that the DR scanning result is normal, the fan blade is qualified.

In operation S250, in the case that the DR scanning result is abnormal, the main driving member drives the carrier member to convey the abnormal portion of the fan blade where the scanning result thereof is abnormal to a position located at a set distance in front of the scanning area of the CT scanning device.

In operation S260, the micro-motion member moves at a second set speed relative to the carrier member, and the micro-motion member drives the fan blade and the driven conveyor to pass through a scanning area of the CT scanning device at the second set speed. Wherein, the first set speed is generally greater than the second set speed.

In operation S270, the CT scanning device scans the abnormal portion of the fan blade to obtain abnormal detailed information.

In the fan blade scanning method according to the embodiment of the present disclosure, it is possible to facilitate the fan blade scanning system to complete the inspection of the fan blade 200, and the carrier member 111 and the micro-motion member 112 may facilitate transmitting the fan blade 200 through a scanning area of the DR scanning device and the CT scanning device, so that the fan blade 200 may be inspected by the DR scanning device and the CT scanning device. The method of the present disclosure may flexibly adapt to the requirements of different scanning modes (a DR scanning mode and a CT scanning mode) for a conveying speed. The DR scanning mode and the CT scanning mode are combined so that it is possible to enhance the inspection quality and improve the inspection efficiency of the fan blade 200.

In some embodiments, after the scanning is finished, the driving conveyor 1 drives the first wheel set 1111 to drive the fan blade 200 and the driven conveyor 2 to retreat back to an initial point at a set speed on the track.

In the description of the present disclosure, it is to be understood that, the orientational or positional relations indicated by the terms "center", "longitudinal", "transverse", "length", "width", "thickness", "up", "down", "front", "rear", "left", "right", "vertical", "horizontal", "top", "bottom", "inside", "outside", "clockwise", "counterclockwise", "axial", "radial" and "circumferential", which are based on the orientational or positional relations shown by the accompanying drawings, are only for facilitating description of the present disclosure and simplifying the description, rather than indicating or implying that the device or element referred thereto has to present a particular orientation, and be constructed and operated in a particular orientation, so that it cannot be understood as limiting the present disclosure. In addition, the features defined as "first" and "second" may explicitly or implicitly comprise one or more of these features.

In the description of the present disclosure, unless otherwise specified, the meaning of "a plurality of" is two or more. In the description of the present disclosure, it is to be noted that unless otherwise specified and limited, the terms "mounted", "connected with" and "connected to", which should be broadly understood, for example, may be fixed connection, detachable connection or integrated connection; may be mechanical connection or electrical connection; may be direct connection, indirect connection through an intermediate medium and communication inside two elements. For those of ordinary skill in the art, the specific meanings of the above-described terms in the present disclosure may be understood according to specific conditions.

In the description of this specification, descriptions referring to the terms such as "one embodiment", "some embodiments", "exemplary embodiments", "examples", "specific examples" or "some examples" mean that specific features, structures, materials or characteristics described in conjunction with this embodiment or example are comprised in at least one embodiment or example of the present disclosure. In this specification, the schematic expressions of the above-described terms do not necessarily refer to the same embodiment or example. Moreover, the specific features, structures, materials or characteristics described may be combined in a suitable manner in any one or more embodiments or examples.

Although the embodiments of the present disclosure have been shown and described, those skilled in the art may understand that: multiple changes, modifications, substitutions and variations may be made to these embodiments without departing from the principles and purposes of the present disclosure, and the scope of the present disclosure is defined by the claims and their equivalents.

It may be understood by those skilled in the art that, the features recited in various embodiments and/or claims of the present disclosure may be in combinations and/or conjunctions, even if such combinations or conjunctions are not specifically recited in the present disclosure. In particular, the features recited in various embodiment and/or claims of the present disclosure may be in combinations and/or conjunctions without departing from the spirit and teaching of the present disclosure. All these combinations and/or conjunctions are within the scope of the present disclosure.

Although the present disclosure has been shown and described with reference to specific exemplary embodiments of the present disclosure, it should be understood by those skilled in the art that, multiple changes in form and details may be made to the present disclosure without departing from the spirit and scope of the present disclosure as defined by the appended claims and their equivalents. Therefore, the scope of the present disclosure should not be limited to the above-described embodiments, but should be determined not only by the appended claims, but also by equivalents thereof.

## Claims

1. A conveying device for scanning a fan blade, comprising:
a driving conveyor comprising a main driving member and a main body member, wherein the main body member is provided with a first mounting portion configured to fixedly mount a first end of the fan blade; and
a driven conveyor provided with a second mounting portion configured to fixedly mount a second end of the fan blade;
wherein in the case that the driving conveyor moves, the fan blade and the driven conveyor are driven to move, so that the fan blade passes through a scanning area of a scanning device,
wherein the main body member comprises:
a carrier member connected with the main driving member so that the main driving member drives the carrier member to move at a first set speed; and
a micro-motion member movably arranged on the carrier member, wherein in the case that the carrier member stops moving, the micro-motion member drives the fan blade and the driven conveyor to perform micro-motion at a second set speed.

2. The conveying device for scanning a fan blade according to claim 1, wherein the micro-motion member comprises:
a driving portion;
a lead screw connected with the driving portion, wherein the driving portion is configured to drive the lead screw to rotate; and
the first mounting portion movably arranged on the lead screw, wherein in the case that the lead screw rotates, the first mounting portion drives the fan blade and the driven conveyor to perform micro-motion at the second set speed.

3. The conveying device for scanning a fan blade according to claim 2, wherein the driving portion is a servo motor.

4. The conveying device for scanning a fan blade according to claim 1, wherein the carrier member comprises:
a first wheel set connected with the main driving member, so that the main driving member drives the first wheel set to move; and
a carrier portion connected to the first wheel set, wherein the micro-motion member is movably arranged on the carrier portion.

5. The conveying device for scanning a fan blade according to claim 1, wherein the driven conveyor comprises:
a support including a support member and a second wheel set, wherein the support member is connected to the second wheel set; and
the second mounting portion arranged on the support member to fixedly mount the second end of the fan blade.

6. The conveying device for scanning a fan blade according to claim 5, wherein the second mounting portion is a clamping member including:
a base arranged on the support member; and
a clamping jaw connected to the base to clamp and fixedly mount the second end of the fan blade.

7. The conveying device for scanning a fan blade according to any one of claim 1 to 6, further comprising:
a track arranged on the scanning area, wherein the driving conveyor and the driven conveyor are rollably arranged on the track.

8. A fan blade scanning system, comprising:
the conveying device for scanning a fan blade according to any one of claim 1 to 7; and
a scanning device for scanning a fan blade conveyed by the conveying device.

9. The fan blade scanning system according to claim 8, wherein the scanning device comprises:
a DR scanning device configured to conduct an overall scan of the fan blade to obtain a scanning result, wherein the scanning result being abnormal or normal; and
a CT scanning device configured to scan the abnormal portion of the fan blade where the scanning result thereof is abnormal.

10. A fan blade scanning method of the fan blade scanning system according to claim 8 or 9, comprising:
fixing the micro-motion member on the carrier member, and the main driving member drives the carrier member to move at a first set speed;
the carrier member drives the micro-motion member and the fan blade to move at the first set speed, so that the fan blade passes through a scanning area of the DR scanning device at the first set speed;
the DR scanning device conduct an overall scan of the fan blade to obtain a DR scanning result, wherein the DR scanning result being abnormal or normal;
in the case that the DR scanning result is normal, the fan blade is qualified;
in the case that the DR scanning result is abnormal, the main driving member drives the carrier member to convey the abnormal portion of the fan blade where the scanning result thereof is abnormal to a position located at a set distance in front of a scanning area of the CT scanning device;
the micro-motion member moves at a second set speed relative to the carrier member, and the micro-motion member drives the fan blade and the driven conveyor to pass through the scanning area of the CT scanning device at the second set speed; and
the CT scanning device scans the abnormal portion of the fan blade where the scanning result thereof is abnormal.
